**Europäisches Patentamt**

**European Patent Office**

**Office européen des brevets**

(19)

(11) Publication number: **0 026 039**

**B1**

(12) **EUROPEAN PATENT SPECIFICATION**

(45) Date of publication of patent specification: **18.04.84**

(21) Application number: **80302747.3**

(22) Date of filing: **11.08.80**

(51) Int. Cl.³: **H 02 P 7/62, H 02 M 5/458**

(54) Operation control apparatus for AC motors.

(30) Priority: **15.08.79 JP 103862/79**

(43) Date of publication of application:
**01.04.81 Bulletin 81/13**

(45) Publication of the grant of the patent:
**18.04.84 Bulletin 84/16**

(84) Designated Contracting States:
**DE FR GB**

(56) References cited:
**DE - B - 2 455 765**

(73) Proprietor: **FANUC LTD**
**5-1, Asahigaoka 3-chome Hino-shi**
**Tokyo 191 (JP)**

(72) Inventor: **Kawada, Shigeki**
**346-15, Oaza-Shimoda Hino-shi**
**Tokyo (JP)**
Inventor: **Ishida, Hiroshi**
**2-73 Matsubaracho, 2-chome Hamura-machi**
**Nishitama-gun Tokyo (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Operation control apparatus for AC motors

This invention relates to apparatus for controlling the operation of an AC motor.

AC motors, and induction motors in particular, are employed in a variety of industrial fields. The kinds of loads that can be driven by these motors are equally diverse. Some induction motors, for example, undergo rapid and frequent increases and decreases in speed, while in others there are positive and negative changes in load torque so as to permit the raising and lowering of an object in the manner of a hoist. Thus there is a requirement that an AC motor functioning as a driving source be operated so as to generate a positive torque as well as a braking torque.

A method of controlling the operation of AC motors which has recently come into fairly widespread use employs a variable voltage-variable frequency inverter. While no major problems are encountered in this method when operating the motor in the driving mode, one difficulty which does arise is the manner of dealing with the rotational energy possessed by the rotor of the motor when it is to be operated in the braking mode at the time of a reduction in speed. Two exemplary methods of dealing with this rotational energy have been adopted in the prior art. In one method the flow of current to the AC motor is interrupted at braking time to permit the motor to slow down naturally owing to mechanical loss attributed to the load. In another method the slip which arises at the time of the speed reduction is suitably controlled and is allowed to dissipate within the motor. The first method, however, requires too much time to achieve the speed reduction and has a very poor control response, while the second method causes the motor to overheat to such an extent that it cannot endure frequent increases and decreases in speed. Another method which can be mentioned is one in which the rotational energy of the rotor is dissipated by allowing a smoothing capacitor, inserted in the inverter mentioned above, to charge until the charged voltage exceeds a specified value, whereupon the capacitor is discharged through a braking resistor connected in parallel with the inverter, thereby to dissipate the energy. However, this method is disadvantageous in that it may lead to destruction of the apparatus if the smoothing capacitor is allowed to charge to an excessively high value, and because it is expensive since the braking resistor increases in size and cost in accordance with the size of the machine to be driven by the motor. Moreover, the method is undesirable in terms of enhancing efficiency because of the fact that the braking energy is wasted in the form of thermal loss.

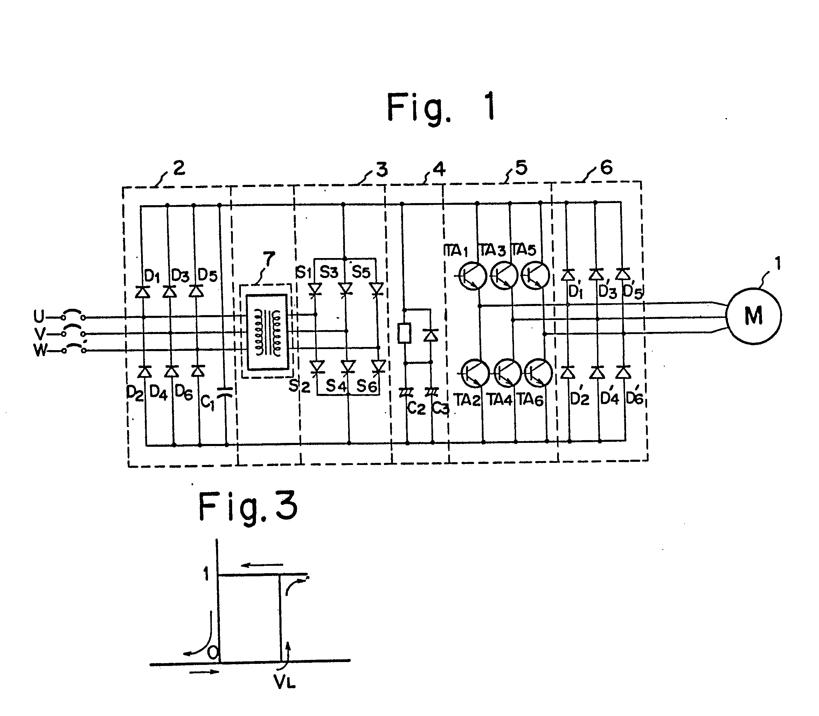

Regenerative type control apparatus as shown in Figure 1 of the accompanying drawings, which is a schematic circuit diagram, provides a regenerative braking method which has been proposed in an effort to improve upon the foregoing arrangements.

The apparatus of Figure 1 includes an AC motor 1 such as a three-phase induction motor, a bridge-type rectifier 2 comprising diodes $D_1$ to $D_6$ for rectifying U, V and W phases of an AC input power supply (the rectifier 2 also including smoothing capacitor $C_1$), a regenerative thyristor bridge inverter 3 comprising thyristors $S_1$ to $S_6$, a smoothing circuit 4 having capacitors $C_2$ and $C_3$, a variable voltage-variable frequency inverter 5 composed of transistors $TA_1$ to $TA_6$, a fly-wheel diode bridge circuit 6, comprising diodes $D_1'$ to $D_6'$, and a step-up transformer 7 for boosting the power source voltage. To control the induction motor 1 with this conventional arrangement, for example, to reduce the motor speed, command speed is reduced to control the voltage and frequency of the variable voltage-variable frequency inverter 5, whereby the synchronous speed in conformance with the newly set frequency becomes smaller than that of motor speed, giving rise to a negative slip condition. Accordingly, the motor begins to run in the regenerative braking region, with the result that the voltage induced in the motor is rectified by the fly-wheel diode bridge circuit 6, serving as a rectifier, thereby raising the voltage on the DC line side. The smoothing capacitors $C_1$, $C_2$ and $C_3$, in order for them to exhibit a smoothing function, are charged to a voltage which is 1.3 to 1.4 times the AC power source voltage even when the motor is operating in the normal driving mode. Nevertheless, when the induction motor is operated in the regenerative region, the smoothing capacitors $C_2$, $C_3$ on the DC line side are particularly charged to, and held at, an even higher voltage. For example, if the AC power source voltage is 200 volts, the voltage to which the capacitor $C_1$ is charged is approximately 260 volts, and the voltage to which the smoothing capacitors $C_2$, $C_3$ are charged is raised to approximately 290 volts.

Under such a condition, commutation of the thyristors $S_1$ to $S_6$ could not normally take place and regenerative operation would be impossible because the AC power source voltage is lower than the voltage on the side of the DC line even if the firing of the regenerative thyristor bridge inverter 3 composed of the thyristors $S_1$ to $S_6$ is controlled. To avoid this inconvenience the step-up transformer 7 is inserted between the thyristor bridge inverter 3 and the AC power source, and the circuitry is arranged in such a manner that there will be intervals in which the AC power source voltage is always higher than the voltage on the DC line side, thereby to enable operation in the regenerative braking region while assuring commutation of the thyristors $S_1$ to $S_6$. However, the apparatus that employs this system is large in size and high in price owing to the need for the step-up transformer 7 of a large capacity.

According to the present invention there is provided apparatus for controlling the operation of an AC motor, which apparatus comprises:

a rectifier connected to an AC power source for converting alternating current into direct current;

a variable voltage-variable frequency inverter for applying drive signals to the AC motor upon receiving the direct current output of the rectifier, the supply voltage and frequency of the drive signals being varied in accordance with an externally applied command;

a regenerative bridge inverter connected between the direct current terminals of the variable voltage-variable frequency inverter and the AC power source;

a smoothing capacitor connected to the said direct current terminals;

characterised in that the regenerative bridge inverter is a transistor bridge inverter having a plurality of transistors in the form of a bridge, and in that a diode is provided in the direct current path between the rectifier and the transistor bridge inverter and is connected so as to be reverse biased when the AC motor operates in a regenerative braking region, and a firing control circuit is provided for detecting reverse bias of the diode, thereby to control the firing of each transistor in the transistor bridge inverter in order to feed back braking energy to the AC power source.

This invention can provide operation control apparatus for an AC motor having improved circuitry for regenerative braking.

The present invention can also provide inexpensive and compact operation control apparatus for an AC motor in which braking energy is disposed of by regenerative braking when the speed of the AC motor is reduced.

The present invention can provide also AC motor operation control apparatus equipped with a regenerative braking circuit which is less expensive and which is capable of being constructed of a much smaller size. An embodiment of the present invention can provide AC motor operation control apparatus which is capable of regenerative braking without the use of a step-up transformer.

Furthermore the present invention can provide an AC motor operation control apparatus in which regenerative braking can be achieved inexpensively without an apparatus of large size.

An embodiment of the present invention as claimed in Claims 2 and 6, can provide an AC motor operation control apparatus in which state regenerative braking can be achieved by the provision of an overcurrent preventing function.

Reference is made, by way of example, to the accompanying drawings, in which:

Figure 1 is a schematic circuit diagram of a previously proposed regenerative type control apparatus for controlling the operation of an AC motor in accordance with the prior art;

Figure 2 is a schematic circuit diagram of apparatus embodying the present invention, for controlling the operation of an AC motor;

Figure 3 is a schematic graphic diagram illustrating the characteristic of a logical circuit 16 included in the circuit of Figure 2;

Figure 4 is a wave form diagram which illustrates waveforms associated with the various portions of the circuit shown in Figure 2 at the time of a regenerative operation; and

Figure 5 is a waveform diagram of voltage and current associated with the various portions of the circuit shown in Figure 2 when a regenerative state is discriminated and when regenerative current is discriminated to determine whether such current is excessive.

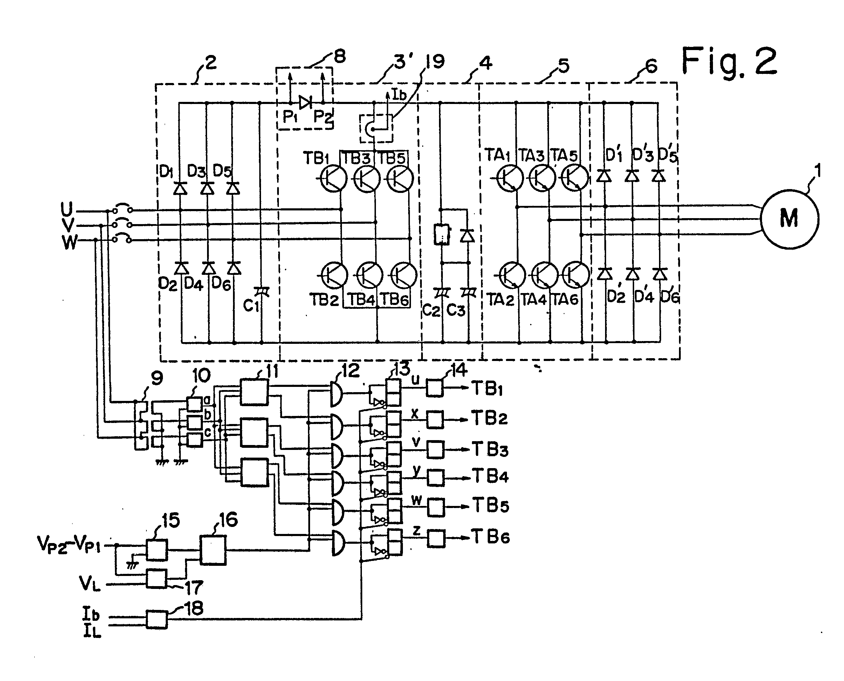

Reference will now be made to Figure 2 to describe the circuit of an AC motor operation control apparatus which embodies the present invention.

In Figure 2 the sections denoted by the references 1, 2, 4, 5 and 6 are identical to those designated by the same reference numerals in Figure 1. The section denoted by numeral 3' corresponds to the regenerative bridge inverter 3 of Figure 1 but in this case is a regenerative bridge inverter in which the thyristors $S_1$ to $S_6$ have been replaced by transistors $TB_1$ to $TB_6$.

The apparatus of Figure 2 further includes a regenerative state discriminating diode 8, a delta-Y connected control transformer 9, comparator circuits 10, logical circuits 11 which receive three-phase signals from the comparator circuit 9 and which distributed six-phase signals. The transformer 9 and the circuits 10, 11 together make up a firing control signal forming circuit. Also provided are AND gate circuits 12 for taking the logical AND between output signals of the logical circuits 11 and an output of an logical circuit 16, the AND gate circuits 12 delivering six-phase distribution signals on the basis of coincidence between outputs of the logical circuits 11 and 16. Flip-flop circuits 13 are provided for setting initial conditions and for resetting the same externally, and amplifier circuits 14 are provided for amplifying the outputs of the flip-flop circuits 13 to supply base signals to corresponding ones of the transistors $TB_1$ to $TB_6$ in the regenerative transistor bridge inverter 3'. The gate circuits 12, flip-flop circuits 13 and amplifier circuits 14 construct a circuit for supplying firing control signals. Numeral 15 denotes a comparator circuit for comparing the potential $(V_{p2}-V_{p1})$ developed across the regenerative state discriminating diode 8 with ground potential, the output thereof being coupled to logical circuit 16. Numeral 17 designates another comparator circuit for comparing the aforesaid potential $(V_{p2}-V_{p1})$ with a reference potential $V_L$, the output thereof being delivered to logical circuit 16. Another comparator circuit 18 compares a detected regenerative current $I_b$ with a reference current $I_L$ and is adapted to send a reset signal to flip-flop circuits 13 when the regenerative current exceeds a reference value. A current detecting coil 19 detects the regenerative current $I_b$ of the regenerative bridge inverter 3'.

In operation, when the AC motor is running in the ordinary driving mode, the AC power source voltage entering from the U, V and W terminals at the left side of Figure 2 is rectified by rectifier 2 and applied to the variable voltage-variable frequency inverter 5 whose transistors are fired successively by a firing circuit, which is not shown, so as to operate the induction motor 1 at a speed which is in accordance with a speed command signal. More specifically, the supply voltage is controlled by regulating the conduction times of the transistors $TA_1$ to $TA_6$ of the inverter 5, and the output frequency of the inverter is controlled by regulating the period of the firing pulses, thereby enabling variable voltage-variable frequency operation. When the speed command is changed to reduce the speed of the induction motor, the newly instructed synchronous speed drops below the speed at which the motor has been rotating up to this time, so that a negative slip condition develops in the motor that causes electric power to be regenerated in the stator winding. The regenerative power causes the smoothing capacitors $C_2$, $C_3$ to charge, thereby raising the voltage on the side of the DC line.

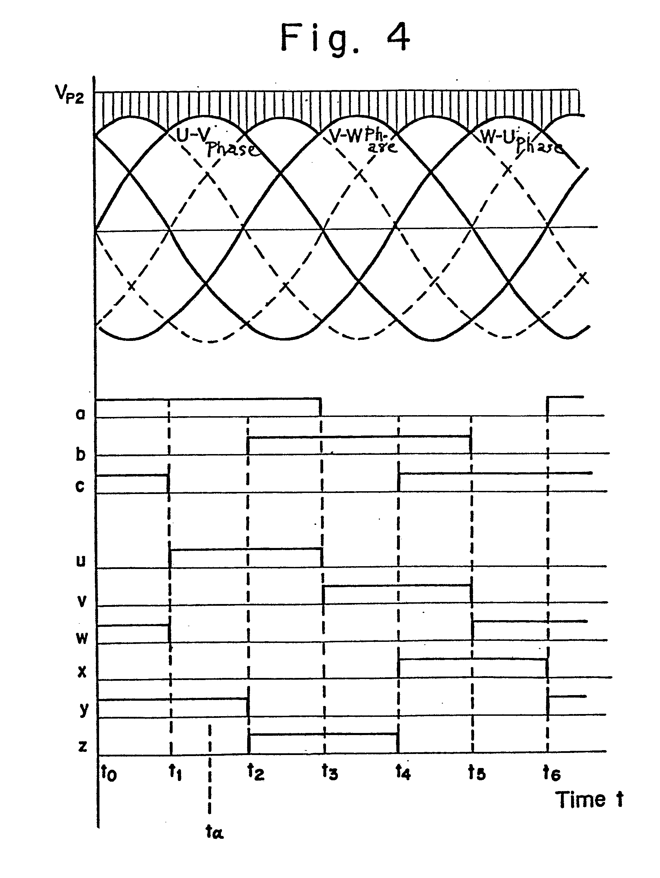

In consequence, a difference is created between the line voltage of the end to which the smoothing capacitors $C_2$ and $C_3$ are connected and the line voltage of the end to which the smoothing capacitor $C_1$ is connected. Accordingly, a potential difference $(V_{p2}-V_{p1})$ between the voltage $V_{p2}$ at the point $P_2$ and the voltage $V_{p1}$ at the point $P_1$ of the regenerative state discriminating diode 8 takes a positive value. From this fact, it is possible to detect that the induction motor is operating in the regenerative mode. It is possible to supply a regenerative current back to the AC power source, in accordance with the voltage difference between the DC voltage and the AC power source voltage, by delivering firing signals to those transistors from amongst the transistors $TB_1$ to $TB_6$ constituting the regenerative transistor bridge inverter 3' which are connected to the two phases of the AC power source between which the highest voltage difference exists. In this state, the induction motor operates as a generator to reduce its speed rapidly down to the level of the command speed. This operation will be described in more detail with reference to the firing signal forming circuit consisting of the transistors $TB_1$ to $TB_6$, as well as to Figure 4 which shows the waveforms of signals at various points in the circuit, shown in Figure 4 in the regenerative operation.

Referring to Figure 4, the voltage at the point $P_2$ of the regenerative state discriminating diode is represented by $V_{p2}$. The sine-wave curves show the line voltages between adjacent phases U, V and W of the AC power source. It will be understood that voltages of positive and negative halfwaves are applied to the transistors $TB_1$, $TB_6$ of the regenerative transistor bridge inverter 3' in accordance with the cycles of the AC power source.

Referring again to Figure 2, sine wave signals $U_2$, $V_2$, $W_2$ are derived from the U, V, and W phases in accordance with the pulsation or variation of respective phase voltages, through control transformer 9. The sine wave signals are compared with ground potential in comparator circuits 10 and are transformed into rectangular wave signals $a$, $b$ and $c$ mutually displaced in phase by 120° as shown in Figure 4. These signals are then delivered to logical circuits 11 and are changed into six-phase signals each of 120° width. These logical circuits 11 may be of a known circuit design as used for the formation of a rotor-position signal in a commutator-less motor. Thus, the output signals from the logical circuits 11 correspond to signals $u$, $v$, $w$ and $x$, $y$, $z$ shown in Figure 4.

Simultaneously, the voltage generated across the regenerative state discriminating diode 8 is delivered to a differential amplifier, which is not shown, adapted to produce a signal corresponding to the potential difference across two terminals of the diode 8. The signal $V_{p2}-V_{p1}$ corresponding to the potential difference across two terminals of the regenerative state discriminating diode 8 is delivered to comparator circuits 15, 17 adapted to compare the potential difference $V_{p2}-V_{p1}$ with the reference voltage $V_L$ and the ground potential, respectively.

A logical circuit 16, having a hysteresis characteristic as shown in Figure 3, produces a logical output "1" or "0", upon receipt of the comparison or deviation signals derived from the comparator circuits 15, 17. This logical circuit 16 may be a combination of a NOR gate and a flip-flop of the R-S type. Specifically, assuming here that the comparator circuit 15 produces a logical output "1" on condition of $(V_{p2}-V_{p1})>0$ and that the comparator circuit 17 produces a logical output "1" on condition of $(V_{p2}-V_{p1})>V_L$, the logical circuit 16 can be formed by directly connecting the output of the comparator 17 to the set terminal of the flip-flop and connecting the output of the comparator 15 to the reset terminal of the flip-flop through a NOT gate.

The logical products of the output from the logical circuit 16 and the distribution signals $u$, $v$, $w$ and $x$, $y$, $z$ which are the outputs from the logical circuits 11 are obtained through AND gates 12, and firing control signals are delivered to the regenerative transistor bridge inverter 3' only after the establishment of the state sufficient for the switching of the operation mode to regenerative operation. The outputs from AND gates 12 are supplied to the flip-flop circuits 13 of the next stage to set the initial conditions of the firing control signals. In addition, the flip-flop circuits 13 are controlled also by the overcurrent in the regenerative transistor bridge inverter 3'.

More specifically, a regenerative current $I_b$ obtained from the current detection coil 19 and the limit current $I_L$ are compared with each other by a comparator circuit 18. If the regenerative current is in excess of the limit current, the flip-flops 13 are reset so that the delivery of base signals to respective transistors $TB_1$ to $TB_6$ of the regenerative transistor bridge inverter 3' is terminated to turn off the transistor bridge inverter 3' to check the overcurrent.

The distribution signals derived from the flip-flop circuits 13 are delivered to the transistors $TB_1$ to $TB_6$ of the regenerative transistor bridge inverter 3' as the base currents, after amplification by the amplifier circuits 14. Thereby, it is possible to obtain stable regenerative operation in such a state that the regenerated voltage is high enough for the supply of power back to the power source, and that the regenerative current is smaller than the limit current.

This regenerative operation will be described hereinunder with specific reference to Figure 4. In the period between moments $t_0$ and $t_1$, base signals $w$ and $y$ are generated to fire the transistors $TB_5$ and $TB_4$ which are connected to the two phases of the AC power supply of maximum interphase voltage, i.e. W and V phases. In the next period between $t_1$ and $t_2$, base signals $u$ and $y$ are formed to fire the transistors $TB_1$ and $TB_4$ connected to the U and V phases. Similarly, the transistors $TB_1$ and $TB_6$, $TB_3$ and $TB_6$, $TB_3$ and $TB_2$ and $TB_5$ and $TB_2$ of the regenerative transistor bridge inverter 3' are turned on in pairs, and the difference between the voltages $V_{p2}$ and $V_{p1}$ i.e. the hatched area in Figure 4, is stably supplied back to the AC power source. It will be clearly understood from the foregoing description that the regenerative operation is halted without delay when the regenerative current increases beyond the limit current $I_1$ or when the voltage difference $V_{p2}-V_{p1}$ takes on a negative value.

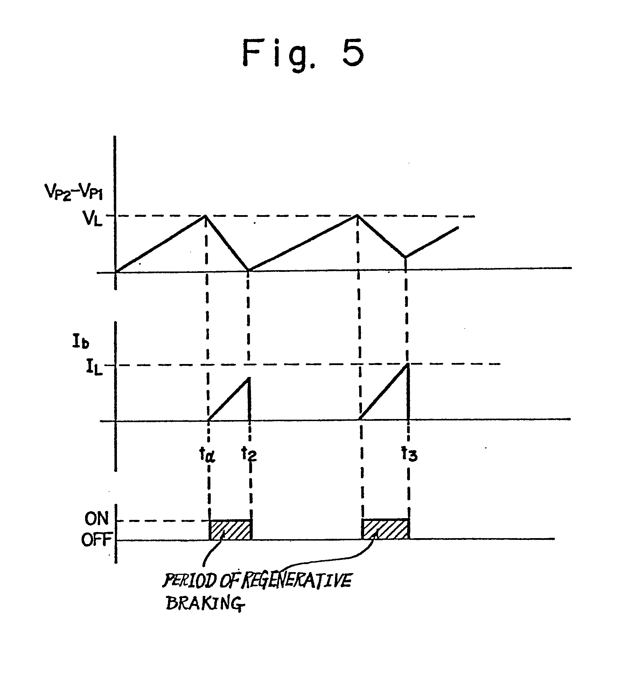

Figure 5 shows the regeneration period (output period of flip-flops 13) and the regenerative current $I_b$ in relation to the voltage difference $V_{p2}-V_{p1}$.

As has been described, according to the invention, transistors are used for the elements of a regenerative bridge inverter for an AC motor, so that commutation failure can be avoided to eliminate the need for a step-up transformer for commutation, which is necessary in the conventional apparatus. At the same time, the size of the apparatus as a whole is advantageously reduced and the economy in the operation of the apparatus is considerably improved.

In addition, a stable regenerative operation is ensured by the detector for detecting the build up of sufficiently high regenerative voltage and by the overcurrent prevention mechanism.

Thus, the present invention provides an operation controlling apparatus for AC motors capable of responding to various load conditions of the AC motors.

**Claims**

1. Apparatus for controlling the operation of an AC motor (1), which apparatus comprises:

a rectifier (2) connected to an AC power source (U, V, W) for converting alternating current into direct current;
a variable voltage-variable frequency inverter (5) for supplying drive signals to the AC motor (1) upon receiving the direct current output of the rectifier (2), the supply voltage and frequency of the drive signals being varied in accordance with an externally applied command;
a regenerative bridge inverter connected between the direct current terminals of the variable voltage-variable frequency inverter (5) and the AC power source (U, V, W);
a smoothing capacitor connected to the said direct current terminals;
characterised in that the regenerative bridge inverter (3') is a transistor bridge inverter having a plurality of transistors ($TB_1$ to $TB_6$) in the form of a bridge, and in that a diode (8) is provided in the direct current path between the rectifier (2) and the transistor bridge inverter (3') and is connected so as to be reverse biased when the AC motor (1) operates in a regenerative braking region, and a firing control circuit (9 to 17) is provided for detecting reverse bias of the diode (8) thereby to control the firing of each transistor ($TB_1$ to $TB_6$) in the transistor bridge inverter (3') in order to feed back braking energy to the AC power source (U, V, W).

2. Apparatus as claimed in claim 1, in which the firing control circuit controls the firing of the transistors ($TB_1$ to $TB_6$) of the transistor bridge inverter (3') in accordance with regenerative current in the transistor bridge inverter.

3. Apparatus as claimed in claim 1 or 2, in which the firing control circuit includes circuitry (9 to 11) for generating a plurality of firing control signals for controlling respective transistors of the transistor bridge inverter (3') in accordance with the voltages of the AC power source (U, V, W) and circuitry (12 to 14) for supplying the firing control signals to respective transistors ($TB_1$ to $TB_6$) of the transistor bridge inverter (3') in dependence upon the reverse biasing of the diode (8).

4. Apparatus as claimed in claim 3, wherein the circuitry (9 to 11) for generating the firing control signals is adapted to generate firing control signals for firing transistors of the transistor bridge inverter (3') in pairs, the transistors of a pair which are fired together being those connected to the two phases of the AC power source (U, V, W) between which maximum interphase voltage exists at the time of firing.

5. Apparatus as claimed in claim 3 or 4, wherein the firing control circuit includes a comparator circuit (15 to 17) for comparing the reverse bias voltage of the diode (8) with a reference voltage, and wherein the circuitry (12 to 14) for supplying the firing control signals is adapted to supply the firing control signals upon receipt of the output from the circuitry (9 to 11) for generating the firing control signals and an output from the comparator circuit (15 to 17).

6. Apparatus as claimed in claim 3, 4 or 5, wherein the firing control circuit further includes a current comparator circuit (18) adapted to compare the regenerative current in the transistor bridge inverter (3') with a reference current, the output from the comparator circuit (18) constituting a control input for the circuitry (12 to 14) for supplying the firing control signals.

7. Apparatus as claimed in claim 3, 4, 5 or 6, wherein the firing control circuit forms six-phase firing control signals upon receipt of three-phase AC power from AC power source.

8. Apparatus as claimed in claim 6, wherein the circuitry (12 to 14) for supplying the firing control signals includes gate circuitry (12) for producing the product of the output from the circuitry (9 to 11) for generating the firing control signals and the output from the bias voltage comparator circuit (15 to 17), and flip-flop circuitry (13) adapted to hold the output of the gate circuit (12), the flip-flop circuitry being adapted to be reset by the output from the current comparator circuit (18).

9. Apparatus as claimed in claim 8, wherein the gate circuitry (12) includes a plurality of gates the number of which corresponds to the number of firing control signals to be generated, and the flip-flop circuitry (13) includes a plurality of flip-flops the number of which corresponds to the number of firing signals to be generated, each flip-flop supplied by the gate circuitry.

**Patentansprüche**

1. Kontrollapparat für den Betrieb von Wechselstrommotoren (1), mit einem Gleichrichter (2, der an eine Wechselstrom-Kraftstromquelle (U, V, W) zum Gleichrichten oder Umsetzen des Wechselstroms in einen Gleichstrom angeschlossen ist, mit einem regelbaren, spannungsgesteuerten Frequenzwandler (5) zum Liefern von Treiberimpulsen an den Wechselstrommotor (1) aufgrund des Empfangs von Gleichstrom-Ausgangssignalen des Gleichrichters (2), wobei die Treiberspannung und die Frequenz der Treiberimpulse in Übereinstimmung mit einem von außen zugeführten Steuerbefehl variiert werden, mit einem Rückspeisungs - Brückenshaltungsinverter, der zwischen die Gleichstrom-Anschlußklemmen des spannungsgesteuerten Frequenzwandlers (5) und die Wechselstrom-Kraftstromquelle (U, V, W) geschaltet ist, und mit einem Glättungskondensator, der zwischen die Gleichspannungs-Ausgangsklemmen des Gleichrichters (2) geschaltet ist, dadurch gekennzeichnet, daß der Rückspeisungs-Brückenschaltungsinverter ein Transistor-Brückenschaltungsinverter (3') ist, der eine Vielzahl von Transistoren $(TB_1 ... TB_6)$ in Form einer Brückenschaltung aufweist, daß eine Diode (8) in dem Gleichstrompfad zwischen dem Gleichrichter (2) und dem Transistor-Brückenschaltungsinverter (3') angeordnet und derart gepolt ist, daß sie in Sperrichtung vorgespannt wird, wenn der Wechselstrommotor (1) in einem spannungserzeugenden Bremsbereich arbeitet, und daß eine Steuerschaltung (9 ... 17) vorgesehen ist, die die Sperrvorspannung der Diode (8) erfaßt, um dadurch das Leitendschalten jedes der Transistoren $(TB_1 ... TB_6)$ in dem Rückspeisungs - Brückenschaltungsinverter (3') derart zu steuern, daß die Bremsenergie in die Wechselstrom-Kraftstromquelle (U, V, W) zurückgespeist wird.

2. Kontrollapparat nach Anspruch 1, dadurch gekennzeichnet, daß die Steuerschaltung (9 ... 17) das Leitendschalten der Transistoren $(TB_1 ... TB_6)$ des Rückspeisungs-Brückenschaltungsinverters (3') in Übereinstimmung mit dem regenerativen oder rückspeisenden Strom in dem Rückspeisungs-Brückenschaltungsinverter (3') steuert.

3. Kontrollapparat nach Anspruch 1 oder 2, dadurch gekennzeichnet, daß die Steuerschaltung (9 ... 17) eine Schaltungsanordnung (9 ... 11) zum Erzeugen einer Vielzahl von Steuersignalen zur Steuerung der entsprechenden Transistoren des Rückspeisungs-Brückenschaltungsinverters (3') in Übereinstimmung mit den Spannungen der Wechselstrom-Kraftstromquelle (U, V, W) und eine Schaltungsanordnung (12 ... 14) zum Liefern der Steuersignale an die betreffenden Transistoren $(TB_1 ... TB_6)$ des Rückspeisungs-Brückenschaltungsinverters (3') in Abhängigkeit von der Sperrvorspannung der Diode (8) enthält.

4. Kontrollapparat nach Anspruch 3, dadurch gekennzeichnet, daß die Schaltungsanordnung (9 ... 11) zum Erzeugen der Steuersignale dazu bestimmt ist, Steuersignale zum paarweisen Leitendschalten der Transistoren des Rückspeisungs-Brückenschaltungsinverters (3') zu erzeugen, wobei die Transistoren eines Paares, die gemeinsam leitendgeschaltet werden, diejenigen sind, die an die beiden Phasenklemmen der Wechselstrom-Kraftstromquelle (U, V, W) angeschlossen sind, zwischen welchen zum Zeitpunkt des Leitendschaltens eine maximale Zwischenphasenspannung besteht.

5. Kontrollapparat nach Anspruch 3 oder 4, dadurch gekennzeichnet, daß die Steuerschaltung eine Komparatorschaltung (15...17) zum Vergleichen der Sperrvorspannung der Diode (8) mit einer Referenzspannung enthält und daß die Schaltungsanordnung (12...14) zum Liefern der Steuersignale dazu bestimmt ist, die Steuersignale aufgrund des Empfangs des Ausgangssignals der Schaltungsanordnung (9...11) zum Erzeugen der Steuersignale und aufgrund eines Ausgangssignals der Komparatorschaltung (15...17) zu liefern.

6. Kontrollapparat nach Anspruch 3, 4 oder 5, dadurch gekennzeichnet, daß die Steuerschaltung desweiteren eine Strom-Komparatorschaltung (18) enthält, die dazu bestimmt ist, den regenerativen oder rückspeisenden Strom in dem Rückspeisungs-Brückenschaltungsinverter (3') mit einem Referenzstrom zu vergleichen, und daß das Ausgangssignal der Strom-Komparatorschaltung (18) ein Steuereingangssignal für die Schaltungsanordnung (12...14) zum Liefern der Steuersignale darstellt.

7. Kontrollapparat nach einem der Ansprüche 3, 4, 5 oder 6, dadurch gekennzeichnet, daß die Steuerschaltung 6-phasige Steuersignale aufgrund der Aufnahme des 3-Phasen-Wechselstroms aus der Wechselstrom-Kraftstromquelle (U, V, W) bildet.

8. Kontrollapparat nach Anspruch 6, dadurch gekennzeichnet, daß die Schaltungsanordnung (12...17) zum Liefern der Steuersignale eine Torschaltungsanordnung (12) zum Erzeugen des Produkts des Ausgangssignals der Schaltungsanordnung (9...11) zum Erzeugen der Steuersignale mit dem Ausgangssignal der Komparatorschaltung (15...17) sowie eine Flipflop-Schaltungsanordnung (13), die dazu bestimmt ist, die Ausgangssignale der Torschaltungsanordnung (12) zu speichern, enthält, wobei für die Flipflop-Schaltungsanordnung (13) vorgesehen ist, daß sie durch das Ausgangssignal der Strom-Komparatorschaltung (18) rückgestellt wird.

9. Kontrollapparat nach Anspruch 8, dadurch gekennzeichnet, daß die Torschaltungsanordnung (12) eine Vielzahl von Torelementen enthält, deren Anzahl mit der Anzahl der Steuersignale korrespondiert, die zu erzeugen sind, daß die Flipflop-Schaltungsanordnung (13) eine Vielzahl von Flipflops enthält, deren Anzahl mit der Anzahl der Steuersignale, die zu erzeugen sind, korrespondiert, und daß jedes der Flipflops von einem aus der Vielzahl von Torelementen angesteuert wird.

## Revendications

1. Appareil pour la commande du fonctionnement d'un moteur à courant alternatif (1), lequel appareil comprend:

un redresseur (2) relié à une source électrique de courant alternatif (U, V, W) pour convertir le courant alternatif en un courant continu;

un inverseur tension variable-fréquence variable (5) prévu pour appliquer des signaux de commande au moteur à courant alternatif (1) lors de la réception de la sortie de courant continu du redresseur (2), la tension et la fréquence d'alimentation des signaux de commande étant amenées à varier selon un order appliqué de l'extérieur;

un inverseur de récupération à pont relié entre les bornes de courant continu de l'inverseur tension variable-fréquence variable (5) et la source électrique de courant alternatif (U, V, W);

un condensateur de lissage relié auxdites bornes de courant continu; caractérisé en ce que l'inverseur de récupération à pont (3') est un inverseur transistorisé à pont présentant plusieurs transistors (TB$_1$ à TB$_6$) formés en pont, et en ce qu'une diode (8) est prévue dans le trajet de courant continu entre le redresseur (2) et l'inverseur transistorisé à pont (3') et est reliée afin d'être polarisée en sens inverse lorsque le moteur à courant alternatif (1) fonctionne dans une zone de freinage par récupération et un circuit de commande d'allumage (9 à 17) est prévu pour détecter la polarisation inverse de la diode (8), afin de commander l'allumage de chaque transistor (TB$_1$ à TB$_6$) de l'inverseur transistorisé à pont (3') pour amener en contre-réaction l'énergie de freinage vers la source électrique de courant alternatif (U, V, W).

2. Appareil selon la revendication 1, dans lequel le circuit de commande d'allumage commande d'allumage des transistors (TB$_1$ à TB$_6$) de l'inverseur transistorisé à pont (3') en accord avec le courant de récupération de l'inverseur transistorisé à pont.

3. Appareil selon la revendication 1 ou 2, dans lequel le circuit de commande d'allumage comprend des moyens (9 à 11) pour former plusieurs signaux de commande d'allumage afin de commander des transistors respectifs de l'inverseur transistorisé à pont (3') selon la tension de la source de courant alternatif (U, V, W) et des moyens (12 à 14) pour appliquer les signaux de commande d'allumage à des transistors respectifs (TB$_1$ à TB$_6$) de l'inverseur transistorisé à pont (3') en dépendance de la polarisation inverse de la diode (8).

4. Appareil selon la revendication 3, dans lequel les moyens (9 à 11) permettant de former les signaux de commande d'allumage sont prévus pour former des signaux de commande d'allumage afin d'allumer des transistors de l'inverseur transistorisé à pont (3') par paires, les transistors d'une paire qui sont allumés ensemble étant ceux qui sont reliés aux deux phases de la source électrique de courant alternatif (U, V, W) entre lesquels existe une tension entre phases maximum au moment de l'allumage.

5. Appareil selon la revendication 3 ou 4, dans lequel le circuit de commande d'allumage comprend un circuit comparateur (15 à 17) permettant de comparer la tension de polarisation inverse de la diode (8) avec une tension de référence, et dans lequel les moyens (12 à 14) permettant d'appliquer les signaux de commande d'allumage sont prévus pour fournir les signaux de commande d'allumage lors de la réception de la sortie des moyens (9 à 11) permettant de former les signaux de commande d'allumage et d'une sortie du circuit comparateur (15 à 17).

6. Appareil selon la revendication 3, 4 ou 5, dans lequel le circuit de commande d'allumage comprend en outre un circuit comparateur de courant (18) prévu pour comparer le courant de récupération de l'inverseur transistorisé à pont (3') avec un courant de référence, la sortie du circuit comparateur (18) constituant une entrée de commande pour les moyens (12 à 14) permettant de former les signaux de commande d'allumage.

7. Appareil selon la revendication 3, 4, 5 ou 6, dans lequel le circuit de commande d'allumage forme des signaux de commande d'allumage hexaphasés lors de la réception d'un courant alternatif triphasé provenant de la source électrique de courant alternatif.

8. Appareil selon la revendication 6, dans lequel les moyens (12 à 14) prévus pour fournir les signaux de commande d'allumage comprennent un circuit porte (12) permettant de réaliser le produit de la sortie des moyens (9 à 11) prévus pour former les signaux de commande d'allumage et de la sortie provenant du circuit comparateur de tension de polarisation (15 à 17), et un circuit à bascule (13) prévu pour maintenir la sortie du circuit porte (12), le circuit à bascule étant prévu pour être remis à l'état initial par la sortie du circuit comparateur de courant (18).

9. Appareil selon la revendication 8, dans lequel le circuit porte (12) comprend plusieurs portes dont le nombre correspond au nombre de signaux de commande d'allumage à former, et le circuit à bascule (13) comprend plusieurs bascules dont le nombre correspond au nombre de signaux d'allumage à former, chaque bascule étant alimentée par le circuit porte.

# Fig. 1

# Fig.3

0 026 039

Fig. 2

# Fig. 4

# Fig. 5

PERIOD OF REGENERATIVE BRAKING